# EUROPEAN PATENT APPLICATION

(11) **EP 1 605 268 A1**
(43) Date of publication of application: **14.12.2005**
(21) Application number: 04719106.9
(22) Date of filing: 10.03.2004
(51) Int. Cl.: G01P 3/44, F16C 19/52, F16C 19/18, F16C 33/60, F16C 41/00, B60B 35/18

(54) **AXLE-SUPPORTING DEVICE**

(30) Priority: 10.03.2003 JP 2003062759; 10.03.2003 JP 2003062761; 10.03.2003 JP 2003062771; 10.03.2003 JP 2003062779; 10.03.2003 JP 2003062781
(71) Applicant: Koyo Seiko Co., Ltd., Osaka-shi, Osaka 542-0081 (JP)
(72) Inventor: KOYAGI, Katsura, KOYO SEIKO CO., LTD., Osaka-shi, Osaka 5420081 (JP); WAKISAKA, Teruyuki, KOYO SEIKO CO., LTD., Osaka-shi, Osaka 5420081 (JP); INOUE, Masahiro, KOYO SEIKO CO., LTD., Osaka-shi, Osaka 5420081 (JP)
(74) Representative: Steinmeister, Helmut
(86) International application number: PCT/JP2004/003148
(87) International publication number: WO 2004/081581

(57) **Abstract**

A sensor device 4 has a resolver comprising a stator 21 provided on a suspension member 1 and a rotor 31 provided on an axle member 2. The axle member 2 comprises a drive shaft 11 to be connected to a power transmission, and a hub shaft 12 having a wheel mount portion 13 and fixed to the drive shaft 11. The stator 21 is provided by a press fit on an axial end of knuckle 1a of the suspension member 1 toward a wheel, and the rotor 31 is provided by a press fit on the hub shaft 12 of the axle member 2. The stator 21 and the rotor 31 are opposed to each other radially thereof. An antifriction bearing 3 has rolling bodies 7 in left and right two rows, an outer ring 5 in the form of an integral ring having two raceways, and divided inner rings 6 each having a single raceway.

## Description

### TECHNICAL FIELD

The present invention relates to axle support devices which comprise a device for supporting an axle of a motor vehicle for mounting a wheel thereon, and a sensor device attached to the device for detecting various items of data as to the motor vehicle.

### BACKGROUND ART

Rotation sensor-equipped axle support devices are used in railroad cars and motor vehicles for supporting an axle or a rotating shaft for transmitting rotation to the axle and for detecting rotation, i.e., the speed of rotation of the axle or shaft or the angle of rotation thereof. Such devices comprise an antifriction bearing, and a sensor device and a pulser ring serving as a member to be detected, the sensor device and the pulser ring being mounted on the bearing (see, the publication of JP-U No. 1-156463)

It has been strongly required that the conventional rotation sensor-equipped axle support device be reduced in diameter and improved in the resolution involved in detecting rotation, whereas with such a device comprising a pulser ring, the resolution is dependent on the number of magnetized poles of the pulser ring, so that the improvement in resolution requires an increase in the number of poles. However, the increase results in a lower magnetic flux density, entailing the problem that the absolute value of signal output of the sensor device diminishes to make it impossible to accurately measure rotation, hence a limitation to the improvement of resolution.

An object of the present invention is to provide an axle support device adapted to detect rotation with high resolution.

### DISCLOSURE OF THE INVENTION

The present invention provides an axle support device comprising a suspension member to be attached to a vehicle body, an axle member for a wheel to be mounted thereon, an antifriction bearing having an outer ring attached to the suspension member, an inner ring mounted on the axle member and rolling bodies arranged between the two rings, and a sensor device, the axle support device being characterized in that the sensor device comprises a resolver composed of a stator and a rotor, the stator being provided on one of the suspension member and the antifriction bearing outer ring, the rotor being provided on one of the axle member and the antifriction bearing inner ring.

The suspension member and the antifriction bearing outer ring are fixed to the vehicle body, while the axle member and the antifriction bearing inner ring are rotatable relative to the vehicle body.

The stator may be provided on the suspension member, and the rotor on the axle member.

In this case, the stator is, for example, annular, is forced into the inner periphery of a knuckle of the suspension member by a press fit. The inner periphery of the knuckle is usually cylindrical, and usually need not be machined for forcing the stator thereinto. The knuckle may of course be machined on its inner periphery for forcing the stator thereinto by a press fit. The rotor is annular, and is provided around the axle member by a press fit, or the face of the rotor to be detected is formed on the axle member by machining. The axle member is, for example, in the form of a stepped solid cylinder, or flanged hollow cylinder. When the rotor is to be provided on the axle member by a press fit, the stepped portion or flange portion of the axle member is utilized for positioning the rotor in place.

With the axle support device wherein the stator is provided on the suspension member with the rotor provided on the axle member, the suspension member and the axle member are rotated relative to each other with a sinusoidal voltage applied to the stator, whereby an air gap between the stator and the face of the rotor to be detected is altered continuously or noncontinuously. This causes the stator to produce a voltage in accordance with the angle of rotation, whereby the state of rotation of the axle member can be detected contactlessly with high accuracy. The stator is mounted directly on the suspension member which is fixed to the vehicle body, so that unlike the case wherein the stator is attached to the outer ring as mounted on the suspension member, the stator is immovable relative to the vehicle body even if the outer ring slightly slides relative to the suspension member. This eliminates the error involved in detecting rotation and attributable to the slippage of the stator, further reliably precluding a break in the wiring provided for the stator.

The stator comprises, for example, an annular core having projections and indentations along the inner periphery or side surface thereof, and a stator winding formed by providing coils around the respective projections.

The rotor may be a magnetic body separate from the axle member. Alternatively, the rotor may be integral with an axle member made of a magnetic material, namely, such an axle member which is machined to provide a required face for use as a rotor. When the former is used, the axle member to be used can be a conventional one. The former is therefore suitable when the axle member is difficult to machine. The latter requires no additional rotor member; the sensor device requires only the additional step of providing a stator on the suspension member by a press fit, and therefore has the advantage that the device can be assembled by a reduced number of steps.

According to an embodiment of the invention, the axle member comprises a drive shaft to be connected to a power transmission and a hub shaft having a wheel mount portion and fixed to the drive shaft, and the stator is provided on a wheel side of the suspension member with respect to an axial direction thereof, the rotor being provided on the hub shaft of the axle member. According to another embodiment, the axle member comprises a drive shaft to be connected to a power transmission and a hub shaft having a wheel mount portion and fixed to the drive shaft, and the stator may be provided alternatively on a vehicle body side of the suspension member with respect to an axial direction thereof, with the rotor provided on the drive shaft of the axle member.

The stator and the rotor are opposed to each other axially thereof or radially thereof. The stator and the rotor are arranged as radially opposed to each other by fixedly forcing the stator into the inner periphery of the suspension member by a press fit with the sensor face thereof directed inward radially thereof, and providing the face to be detected on the outer periphery of the rotor. The stator and the rotor are arranged as axially opposed to each other by fixedly forcing the stator into the inner periphery of the suspension member by a press fit with the sensor face thereof directed outward axially thereof, and providing the face to be detected on the inner side face of the rotor.

The face of the rotor to be detected and opposed to the stator radially thereof can be of various shapes insofar as it is not in the form of a perfect cylindrical face. For example, the face to be detected can be a cylindrical face which is eccentric in its entirety, or a cylindrical face having an outer periphery which is partly cut out. The eccentric cylindrical face can be obtained easily and accurately by machining the outer periphery of the rotor or axle member, with the axis of a cutting tool positioned as deflected from the center axis of the inner periphery of the rotor or axle member. The cut-out cylindrical face may have one or more cutouts, and the cutouts need not be arranged at equal intervals. Such a cut-out cylindrical face can be formed on the axle member easily with high accuracy, for example, by making an axle member in the same manner as in the prior art and thereafter forming a cutout or cutouts in the outer periphery of the axle member axially thereof, for example, by the same method as is used for making key grooves. The cutout is not limited only to a groove but may be, for example, in the form of a flat portion formed partly in the circumference.

The face of the rotor to be detected and opposed to the stator axially thereof can be of various shapes insofar as it is a side face deflected from a flat face which is perfectly perpendicular to the axial direction. For example, the rotor face to be detected can be a side face which is inclined in its entirety from a plane perpendicular to the axial direction, a side face which is wavy in its entirety or which is frustoconical in its entirety, a side face having one or a plurality of cutouts locally or in its entirety, or a side face having one or a plurality of projections or indentations locally or in its entirety.

According to an embodiment of axle support device of the present invention, the axle member is provided with a universal joint at one end thereof closer to the vehicle body, and the universal joint has an outer ring outer periphery serving as a face of the rotor to be detected.

In this case, the stator comprises, for example, an annular core having an inner periphery in the form of comb teeth and a stator winding provided by forming coils on the respective teeth of the core. The stator is forced into the inner periphery of the knuckle of the suspension member by a press fit with the sensor face directed inward radially thereof.

The universal joint serves to connect the drive shaft to a power transmission. The universal joint is, for example, a constant velocity joint of the bar field type comprising an outer ring and an inner ring which are spherical and have the same center, and balls provided between these rings. The outer ring is integral with the end of the axle member which end is closer to the vehicle body.

When the axle support device wherein the outer ring outer periphery of the universal joint serves as the rotor face to be detected is used for detecting rotation for ABS, the rotation can be detected with sufficient accuracy as required even if the rotor face to be detected and facing toward the axial direction is the outer ring outer periphery of the universal joint, and a cost reduction can be achieved by using the outer ring outer periphery as the rotator face to be detected. Moreover, the fact that the outer ring of the universal joint deforms by being subjected to the force exerted by the balls is utilized to use the joint outer ring outer periphery as the rotor without machining the ring outer periphery. This obviates the need to use a rotor member anew so as to provide a resolver merely by forcing the stator into the suspension member by a press fit while suppressing an increase in cost.

According to an embodiment of axle support device of the invention, the axle member is provided with a flange portion having wheel attaching bolts, and the flange portion of the axle member serves as the rotor.

In this case, the stator comprises, for example, an annular core having an inner periphery or a side face in the form of comb teeth and a stator winding provided by forming coils on the respective teeth of the core. The stator is fixed to the knuckle of the suspension member with the sensor face thereof opposed to the face of the flange portion to be detected. The portion to which the stator is to be fixed is selected suitably from among the inner periphery of the knuckle, the outer periphery of the knuckle and an axial end face of the knuckle.

The flange portion of the axle member is noncircular and is therefore usable as the rotor. For example, the top faces of the wheel attaching bolts can be used each as the rotor face to be detected. The flange portion usually has on a side surface thereof thick wall portions for reinforcing the respective wheel attaching bolts, and to ensure both reinforcement and a weight reduction, these thick wall portions are each a portion of increased thickness which is noncircular when seen axially of the flange. (Stated more specifically, the flange portion has an increased wall thickness in the vicinity of each bolt and a small wall thickness at portions which are away from the bolt.) The periphery of each thick wall portion can be made to serve as the rotor face to be detected.

With the axle support device wherein the flange portion of the axle member serves as the rotor, the axle member flange portion which is noncircular is utilized for use as the rotor without machining the flange portion. This eliminates the need to use an additional rotor member anew, and a resolver can be provided merely by fixing the stator to the suspension member as an additional step. The resolver is made usable accordingly with a cost increase suppressed. In the case where this axle support device is used for detecting rotation for ABS, the rotation is detectable with satisfactory accuracy as required even if the rotor face to be detected and opposed to the axial direction is a specified face of the flange portion. Thus, the use of the face of the flange portion as the rotor face to be detected results in a cost reduction.

The stator and the rotor (the face of the flange portion to be detected) are opposed to each other axially thereof or radially thereof. The axial opposition can be realized, for example, by causing the top face of each wheel attaching bolt to serve as the rotor face to be detected and causing the sensor face of the stator to be opposed to the bolt top face from inside radially outward. Since the flange portion is noncircular, a flange side face other than the bolt top face can be utilized to position the stator and the rotor (flange portion side face) as opposed to each other. The radial opposition can be realized, for example, by causing the outer periphery of a noncircular thick wall portion provided on the flange portion side surface to serve as the rotor face to be detected and positioning the sensor face of the stator as opposed to the thick wall portion outer periphery from outside radially inward.

According to an embodiment of axle support device of the invention, the stator is provided not on the suspension member but on the outer ring of the antifriction bearing, and the rotor is provided not on the axle member but on the inner ring of the antifriction bearing.

In this case, the stator comprises, for example, an annular core having projections and indentations along the inner periphery or side surface thereof, and a stator winding formed by providing coils around the respective projections. The stator is forced into the inner periphery of the outer ring by a press fit. The rotor is annular and is formed around the inner ring by a press fit, or the outer periphery of the inner ring or the side face of the inner ring is machined to provide the rotor face to be detected.

With the axle support device wherein the stator and the rotor are provided on the antifriction bearing, the suspension member and the axle member are rotated relative to each other with a sinusoidal voltage applied to the stator to rotate the outer ring of the bearing and the inner ring thereof relative to each other, whereby an air gap between the stator and the rotor face to be detected is altered continuously or noncontinuously. This causes the stator to produce a voltage in accordance with the angle of rotation, whereby the state of rotation of the axle member can be detected contactlessly with high accuracy. When the axle support device is used for detecting rotation for ABS, the rotation is detectable with satisfactory accuracy as required even if the rotor face to be detected and opposed to the stator radially thereof is a simple eccentric cylindrical face or a cut-out cylindrical face as already mentioned, or even when the rotor face to be detected and opposed to the stator axially thereof is one of the side faces of various shapes mentioned. Thus, a lower cost can be achieved by giving the rotor a relatively simple detectable face. Furthermore, the stator and the rotor can be incorporated into the antifriction bearing in advance. This serves to reduce an increase in space due to the use of the stator, while the axle support device can be assembled as easily as when no resolver is used.

The stator is provided on one of a wheel side and a vehicle body side of the outer ring with respect to an axial direction thereof, and an outer periphery of the inner ring opposed to the stator serves as the rotor face to be detected. The stator is provided on one of a wheel side and a vehicle body side of the outer ring with respect to an axial direction thereof, and the outer periphery of the inner ring opposed to the stator is alternatively provided with the rotor as a member separate from the inner ring. In the former case, there is no need to use a rotor member anew; the stator needs only to be provided on the outer ring by a press fit. This results in the advantage that the device can be assembled by a reduced number of steps. When the latter is used, the inner ring to be used can be a conventional one. The latter is therefore suitable when the inner ring is difficult to machine. The stator is provided at a midportion of the outer ring, and the face of the inner ring opposed to the stator serves as the rotor face to be detected. Alternatively, the outer periphery of the inner ring opposed to the stator is provided with the rotor as a member separate from the inner ring. Even in these cases, the former has the advantage of reducing the number of assembling steps, while the latter is suitable when the inner ring is difficult to machine.

The stator and the rotor are opposed to each other radially thereof or axially thereof. The stator and the rotor are arranged as radially opposed to each other by fixedly forcing the stator into the inner periphery of the outer ring by a press fit with the sensor face thereof directed inward radially thereof, and providing the face to be detected on the outer periphery of the rotor. The stator and the rotor are arranged as axially opposed to each other by fixedly forcing the stator into the inner periphery of the outer ring by a press fit with the sensor face thereof directed outward axially thereof, and providing the face to be detected on the inner side face of the rotor.

The face of the rotor to be detected and opposed to the stator radially thereof can be of various shapes insofar as it is not in the form of a perfect cylindrical face. For example, the face to be detected can be a cylindrical face which is eccentric in its entirety, or a cylindrical face having an outer periphery which is partly cut out. The eccentric cylindrical face can be obtained easily and accurately by machining the outer periphery of the rotor or axle member, with the axis of a cutting tool positioned as deflected from the center axis of the inner periphery of the rotor or axle member. The cut-out cylindrical face may have one or more cutouts, and the cutouts need not be arranged at equal intervals. Such a cut-out cylindrical face can be formed on the inner ring easily with high accuracy, for example, by making an inner ring in the same manner as in the prior art and thereafter forming a cutout or cutouts in the outer periphery of the inner ring axially thereof, for example, by the same method as is used for making key grooves. The cutout is not limited only to a groove but may be, for example, in the form of a flat portion formed partly in the circumference.

The face of the rotor to be detected and opposed to the stator axially thereof can be of various shapes insofar as it is a side face deflected from a flat face which is perfectly perpendicular to the axial direction. For example, the rotor face to be detected can be a side face which is inclined in its entirety from a plane perpendicular to the axial direction, a side face which is wavy in its entirety or which is frustoconical in its entirety, a side face having one or a plurality of cutouts locally or in its entirety, or a side face having one or a plurality of projections or indentations locally or in its entirety.

According to an embodiment of axle support device of the invention, the rotor is provided on the axle member, and the stator is provided on the outer ring of the antifriction bearing.

In this case, the stator comprises, for example, an annular core having projections and indentations along the inner periphery or side surface thereof, and a stator winding formed by providing coils around the respective projections. The stator is forced into the inner periphery of the outer ring by a press fit. The rotor is annular and is provided around the inner by a press fit. Alternatively the outer periphery of the axle member is machined to form the rotor face to be detected.

With the axle support device wherein the stator is provided on the outer ring of the antifriction bearing, the suspension member and the axle member are rotated relative to each other with a sinusoidal voltage applied to the stator, rotating the bearing outer ring fixed to the suspension member and the axle member relative to each other, whereby an air gap between the stator and the rotor face to be detected is altered continuously or noncontinuously. This causes the stator to produce a voltage in accordance with the angle of rotation, whereby the state of rotation of the axle member can be detected contactlessly with high accuracy. When the axle support device is used for detecting rotation for ABS, the rotation is detectable with satisfactory accuracy as required even if the rotor face to be detected and opposed to the stator radially thereof is a simple eccentric cylindrical face or a cut-out cylindrical face as already mentioned, or even when the rotor face to be detected and opposed to the stator axially thereof is one of the side faces of various shapes mentioned. Thus, a lower cost can be achieved by giving the rotor a relatively simple detectable face.

The stator may be provided on the outer ring on a vehicle body side thereof with respect to an axial direction thereof, or on the outer ring between rolling bodies as arranged axially thereof.

The stator and the rotor are opposed to each other radially thereof or axially thereof. The stator and the rotor are arranged as radially opposed to each other by fixedly forcing the stator into the inner periphery of the outer ring by a press fit with the sensor face thereof directed inward radially thereof, and providing the face to be detected on the outer periphery of the axle member. The stator and the rotor are arranged as axially opposed to each other by fixedly forcing the stator into the inner periphery of the outer ring by a press fit with the sensor face thereof directed outward axially thereof, providing the rotor around a stepped portion of the stepped axle member by a press fit, and forming the face to be detected on the side face of the rotor.

The antifriction bearing may have the rolling bodies in two rows, and the outer ring is an integral ring having two raceways, and the inner ring comprises divided rings each having a single raceway.

Various resolvers are usable which include brushless resolvers of various types and brushless synchronous type, among which suitable are VR-type (variable-reactance type) resolvers.

The sensor device is provided with a processing circuit for processing the signal to be output in accordance with the air gap between the stator and the rotor face to be detected. Preferably, the processing circuit has a rotation detecting unit for determining the angle of rotation or rotational speed required, for example, for ABS, and a ground contact load calculating unit for calculating the ground contact load on the wheel from the air gap between the stator and the rotor.

With speed variations of the vehicle or alterations in the posture thereof, the ground contact load on each tire varies, and the displacement of the axle relative to the vehicle body varies with the magnitude of the ground contact load. The displacement of the axle corresponds to the air gap between the stator and the rotor. Accordingly, by determining the relationship between the ground contact load on the tire and the displacement of the axle member in advance, and measuring the air gap between the stator and the rotor by the resolver, the ground contact load can be calculated from the ground contact load-displacement relational expression and from the air gap with high accuracy. The ground contact load on the tire thus obtained is used as substitute data for the slip ratio in ABS control and also for drive force control or brake force control, thus contributing to improvements in vehicle control. Since the resolver itself detects rotation, rotation data is also available from the resolver along with the ground contact load, such that the important parameters of wheel rotation and tire ground contact load can be obtained by a single sensor.

### BRIEF DESCRIPTION OF THE DRAWINGS

FIG. 1 is a cross sectional view showing a first embodiment of axle support device of the invention.
FIG. 2 is a cross sectional view showing a second embodiment of axle support device of the invention.
FIG. 3 is a cross sectional view showing a third embodiment of axle support device of the invention.
FIG. 4 is a cross sectional view showing a fourth embodiment of axle support device of the invention.
FIG. 5 is a cross sectional view showing a fifth embodiment of axle support device of the invention.
FIG. 6 is a cross sectional view showing a sixth embodiment of axle support device of the invention.
FIG. 7 is a cross sectional view showing a seventh embodiment of axle support device of the invention.
FIG. 8 is a cross sectional view showing an eighth embodiment of axle support device of the invention.
FIG. 9 is a cross sectional view showing a ninth embodiment of axle support device of the invention.
FIG. 10 is a cross sectional view showing a tenth embodiment of axle support device of the invention.
FIG. 11 is a cross sectional view showing an eleventh embodiment of axle support device of the invention.
FIG. 12 is a cross sectional view showing a twelfth embodiment of axle support device of the invention.
FIG. 13 is a cross sectional view showing a thirteenth embodiment of axle support device of the invention.
FIG. 14 is a cross sectional view showing a fourteenth embodiment of axle support device of the invention.
FIG. 15 is a cross sectional view showing a fifteenth embodiment of axle support device of the invention.
FIG. 16 is a cross sectional view showing a sixteenth embodiment of axle support device of the invention.
FIG. 17 is a cross sectional view showing a seventeenth embodiment of axle support device of the invention.
FIG. 18 is a cross sectional view showing an eighteenth embodiment of axle support device of the invention.
FIG. 19 is a cross sectional view showing a nineteenth embodiment of axle support device of the invention.
FIG. 20 is a cross sectional view showing a twentieth embodiment of axle support device of the invention.
FIG. 21 is a cross sectional view showing a twenty-first embodiment of axle support device of the invention.
FIG. 22 is a cross sectional view showing a twenty-second embodiment of axle support device of the invention.
FIG. 23 is a block diagram showing a processing circuit for the axle support device of the invention.

### BEST MODE OF CARRYING OUT THE INVENTION

Embodiments of the invention will be described below with reference to the drawings.

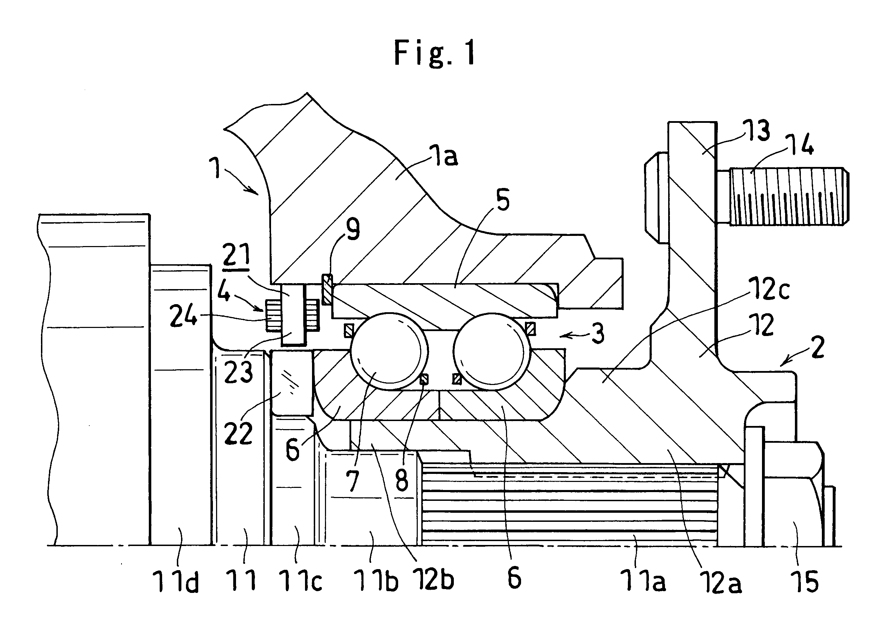

The terms "left," "right," "upper" and "lower" as used in the following description refer respectively to the left- and right-hand sides and upper and lower sides of FIGS. 1 to 22. The left-hand side of these drawings is the inside of the vehicle, and the right-hand side thereof is the outside of the vehicle.

FIG. 1 shows the axle support device of a first embodiment, which comprises a suspension member 1 to be attached to a vehicle body; an axle member 2 for a wheel to be mounted thereon; an antifriction bearing 3 having an outer ring 5 attached to the suspension member 1, inner rings 6 mounted on the axle member 2, a plurality of rolling bodies 7 arranged between the raceway rings 5, 6 and retainers 8 for holding these rolling bodies 7; and a sensor device 4.

The antifriction bearing 3, which is a double-row angular ball bearing, has balls serving as the rolling bodies 7 and arranged in left and right two rows between the outer ring 5 and the inner rings 6. The outer ring 5 is an integral ring having two raceways, while the inner rings 6 are divided rings each having a single raceway. The outer ring 5 is fitted in the inner periphery of a knuckle 1a constituting the suspension member 1 and fixedly held by a stepped portion provided in the vicinity of the right end thereof, and is prevented from moving axially thereof by a retaining ring 9.

The axle member 2 comprises a drive shaft 11 connected by a constant velocity joint (not shown) to a power transmission (not shown), and a hub shaft 12 having a wheel mount portion 13 and fixed to the drive shaft 11. The drive shaft 11 is in the form of a solid cylinder having stepped portions and includes a right end portion 11a having the smallest diameter and serrations on its outer periphery. The drive shaft 11 has a plurality of stepped portions, i.e., a first large-diameter portion 11b integral with the left end of the right end portion, i.e., the smallest-diameter portion 11a, a second large-diameter portion 11c integral with the left end of the first large-diameter portion 11b and a third large-diameter portion 11d integral with the left end of the second large-diameter portion 11c. The hub shaft 12 has a hollow cylindrical portion 12a provided on its inner periphery with serrations corresponding to the serrations of the drive shaft 11, a left end portion 12b integral with the left end of the cylindrical portion 12a, having a larger inside diameter than the cylindrical portion 12a and fitted around the first large-diameter portion 11b of the drive shaft 11, and an inner ring bearing portion 12c provided around an intermediate portion of the cylindrical portion 12a. The hub shaft 12 is fittingly in engagement with the drive shaft 11 by the presence of the serrations and is fixed to the drive shaft 11 by a nut 15 screwed on an externally threaded portion provided at the right end portion of the drive shaft 11. The left and right inner rings 6 are fitted around the left end portion 12b and the hollow cylindrical portion 12a by a press fit, and are positioned in place by the contact of the right face of the right inner ring 6 with the left face of the inner ring bearing portion 12c. The cylindrical portion 12a has a flange portion serving as the wheel mount portion 13 and formed in the vicinity of the right end thereof. The wheel mount portion (flange portion) 13 has fixed thereto a plurality of bolts 14 for mounting a wheel.

The sensor device 4 has a VR-type brushless resolver comprising a stator 21 and a rotor 22 for measuring radial displacements. The stator 21 is forced into the inner periphery of the left end (axial end toward the vehicle body) of the knuckle 1a of the suspension member 1 by a press fit, with its sensor face directed inward radially thereof. According to the present embodiment, the rotor 22 is provided around the second large-diameter portion 11c of the drive shaft 11 of the axle member 2 by a press fit so as to be opposed to the stator 21 radially thereof. The outer periphery of the rotor 22 is provided with a specified face (such as an eccentric cylindrical face or cylindrical face having a cutout) which is detectable by the stator 21 every turn of rotation of the rotor. The stator 21 comprises an annular core 23 having projections and indentations along its inner periphery, and a stator winding 24 formed by providing coils around the respective projections of the core 23. Signals from the stator 21 are delivered to the outside through a lead wire, connector pin and like wiring members (not shown).

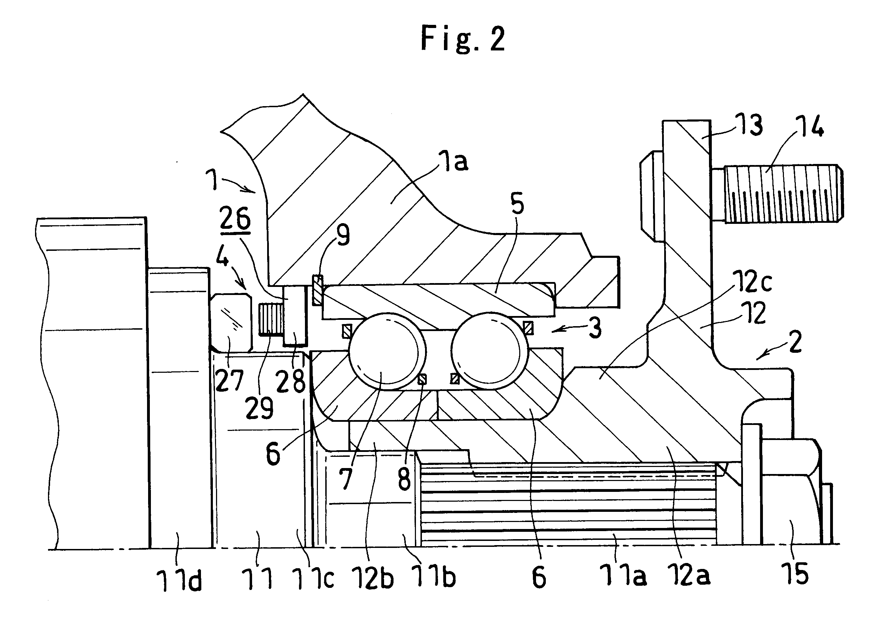

FIG. 2 shows a second embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of this embodiment has a VR type brushless resolver comprising a stator 26 and a rotor 27 for measuring axial displacements. The stator 26 is forced into the inner periphery of the left end (axial end toward the vehicle body) of the knuckle 1a of the suspension member 1 by a press fit, with its sensor face directed outward axially thereof. The rotor 27 is provided around the second large-diameter portion 11c of the drive shaft 11 of the axle member 2 by a press fit so as to be opposed to stator 26 axially thereof. The rotor 27 has a left side face in contact with the right face of the third large-diameter portion 11d and a right side face serving as a specified face (such as a face having a projection or indentation, or a flat face having a cutout) which is detectable by the stator 26 every turn of rotation of the rotor.

The stator 26 comprises an annular core 28 having projections and indentations on a side surface thereof, and stator winding 29 formed by providing coils around the respective projections of the core 28. Signals from the stator 26 are delivered to the outside through a lead wire, connector pin and like wiring members (not shown).

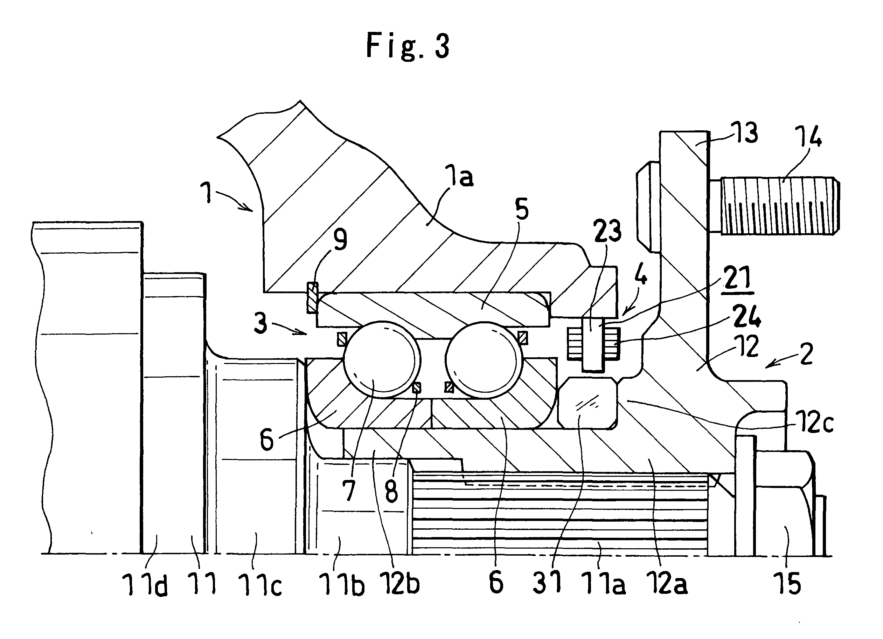

FIG. 3 shows a third embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of this embodiment has a VR type brushless resolver comprising a stator 21 and a rotor 31 for measuring radial displacements. The stator 21 is forced into the inner periphery of the right end (axial end toward the wheel) of the knuckle 1a of the suspension member 1 by a press fit, with its sensor face directed inward radially thereof. According to the present embodiment, the rotor 31 is fitted around the hollow cylindrical portion 12a of hub shaft 12 of the axle member 2 from the left by a press fit so as to be opposed to the stator 21 radially thereof. The inner ring bearing portion 12c of the hub shaft 12 has a left face which is positioned closer to the right end thereof than that of the first embodiment. The rotor 31 is positioned in place by the contact of the right face of the rotor 31 with this inner ring bearing portion 12c. The inner rings 6 are positioned in place by the contact of the right face of the right inner ring 6 with the left face of the rotor 31. The outer periphery of the rotor 31 is provided with a specified face (such as an eccentric cylindrical face or cylindrical face having a cutout) which is detectable by the stator 21 every turn of rotation of the rotor. The stator 21 comprises an annular core 23 having projections and indentations along its inner periphery, and a stator winding 24 formed by providing coils around the respective projections of the core 23. Signals from the stator 21 are delivered to the outside through a lead wire, connector pin and like wiring members (not shown).

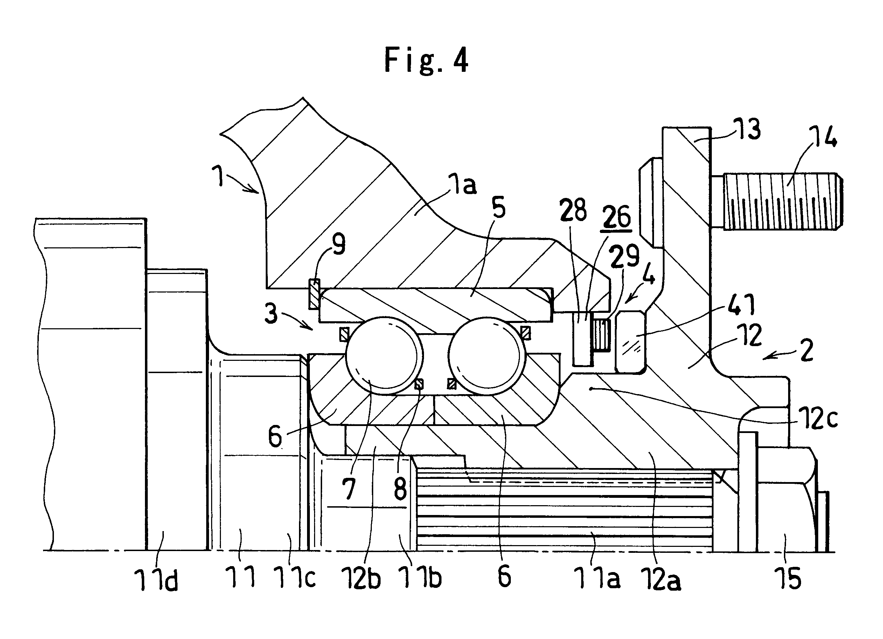

FIG. 4 shows a fourth embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 26 and a rotor 41 for measuring axial displacements. The stator 26 is forced into the inner periphery of the right end (axial end toward the wheel) of the knuckle 1a of the suspension member 1 by a press fit, with its sensor face directed outward axially thereof. The rotor 41 is provided around the inner ring bearing portion 12c of the hub shaft 12 of the axle member 2 by a press fit so as to be opposed to stator 26 axially thereof. The rotor 41 has a right side face in contact with the left face of base of the wheel mount portion 13 and a left side face serving as a specified face (such as a face having a projection or indentation, or a flat face having a cutout) which is detectable by the stator 26 every turn of rotation of the rotor.

The stator 26 comprises an annular core 28 having projections and indentations on a side surface thereof, and a stator winding 29 formed by providing coils around the respective projections of the core 28. Signals from the stator 26 are delivered to the outside through a lead wire, connector pin and like wiring members (not shown).

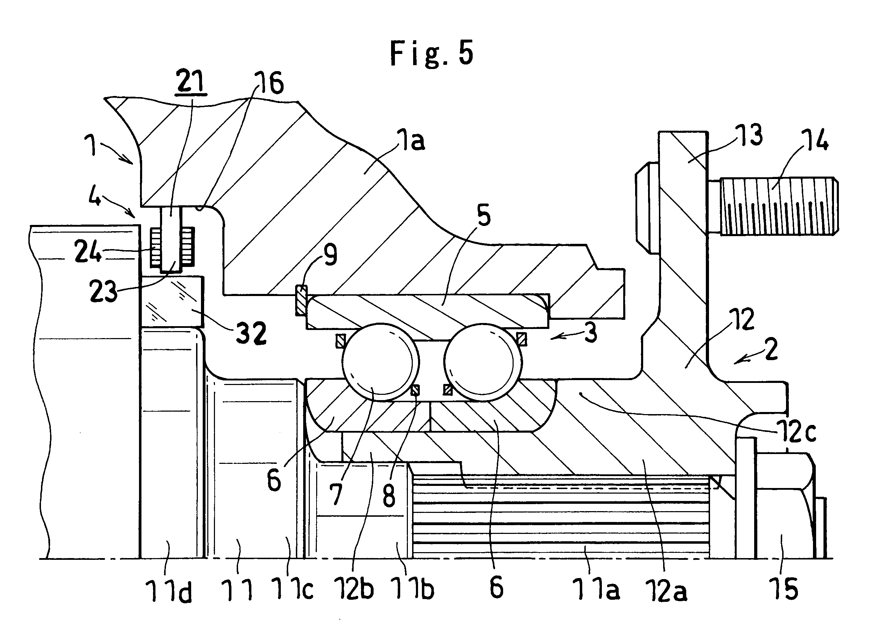

FIG. 5 shows a fifth embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of this embodiment has a VR type brushless resolver comprising a stator 21 and a rotor 32 for measuring radial displacements. The stator 21 is forced into the inner periphery of the left end (axial end toward the vehicle body) of the knuckle 1a of the suspension member 1 by a press fit, with its sensor face directed inward radially thereof. The knuckle 1a has an annular recess 1b for placing the stator 21 in so as to avoid the interference of the stator with the axle member 2. According to the present embodiment, the rotor 32 is fitted around the third large-diameter portion 12d of hub shaft 12 of the axle member 2 from the right by a press fit so as to be opposed to the stator 21 radially thereof. The outer periphery of the rotor 32 is provided with a specified face (such as an eccentric cylindrical face or cylindrical face having a cutout) which is detectable by the stator 21 every turn of rotation of the rotor. The stator 21 comprises an annular core 23 having projections and indentations along its inner periphery, and a stator winding 24 formed by providing coils around the respective projections of the core 23. Signals from the stator 21 are delivered to the outside through a lead wire, connector pin and like wiring members (not shown).

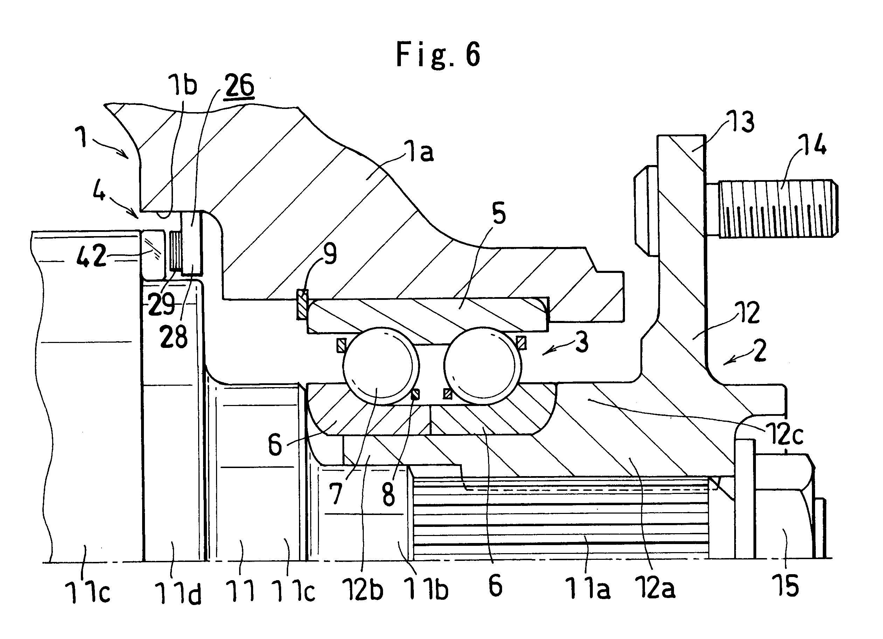

FIG. 6 shows a sixth embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 26 and a rotor 42 for measuring axial displacement. The stator 26 is forced into the inner periphery of the left end (axial end toward the vehicle body) of the knuckle 1a of the suspension member 1 by a press fit, with its sensor face directed outward axially thereof. The knuckle 1a has an annular recess 1b for placing the stator 26 in so as to avoid the interference of the stator with the axle member 2. The rotor 42 is provided around the third large-diameter portion 11d of the drive shaft 11 of the axle member 2 by a press fit so as to be opposed to stator 26 axially thereof. The rotor 42 has a left side face in contact with the right face of the fourth large-diameter portion 11e and a right side face serving as a specified face (such as a face having a projection or indentation, or a flat face having a cutout) which is detectable by the stator 26 every turn of rotation of the rotor.

The stator 26 comprises an annular core 28 having projections and indentations on a side surface thereof, and a stator winding 29 formed by providing coils around the respective projections of the core 28. Signals from the stator 26 are delivered to the outside through a lead wire, connector pin and like wiring members (not shown).

According to the foregoing embodiments, the rotor 22, 27, 31, 41, 32 or 42 is a member separate from the drive shaft 11 or hub shaft 12 of the axle member 2, whereas the outer periphery or side face of the drive shaft 11 or hub shaft 12 can be machined to provide a rotor.

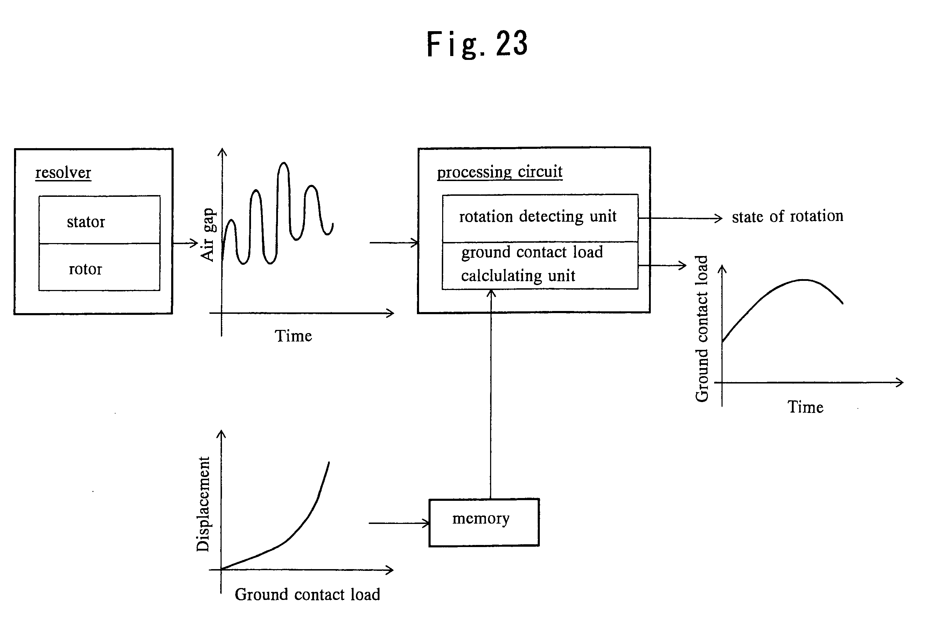

With the axle support devices of the first to sixth embodiments, the rotation of the axle member 2 varies the gap between the sensor face of the stator 21 or 26 and the face of the rotor 22, 27, 31, 41, 32 or 42 to be detected, for the stator 21 or 26 to produce voltage in accordance with the angle of rotation. Variations in the voltage of the stator 21, 26 are sent to a processing circuit via the signal line. Further variations in the ground contact load on the tire alter the displacement of the axle member 2 relative to the suspension member 1. This varies the air gap between the stator 21 or 26 and the rotor 22, 27, 31, 41, 32 or 42 to be detected by the resolver. As shown in FIG. 23, the variations in the air gap are output from the resolver as voltage variations, while the processing circuit of the resolver (sensor device) has a rotation detecting unit. This unit determines the angle of rotation or rotational speed required, for example, for ABS based on the output signal. The processing circuit of the resolver further has a ground contact load calculating unit which has stored therein an expression for calculating the ground contact load from the displacement output as a voltage variation. The ground contact load is calculated by the calculating unit. The ground contact load obtained is delivered to vehicle control means for controlling the vehicle properly.

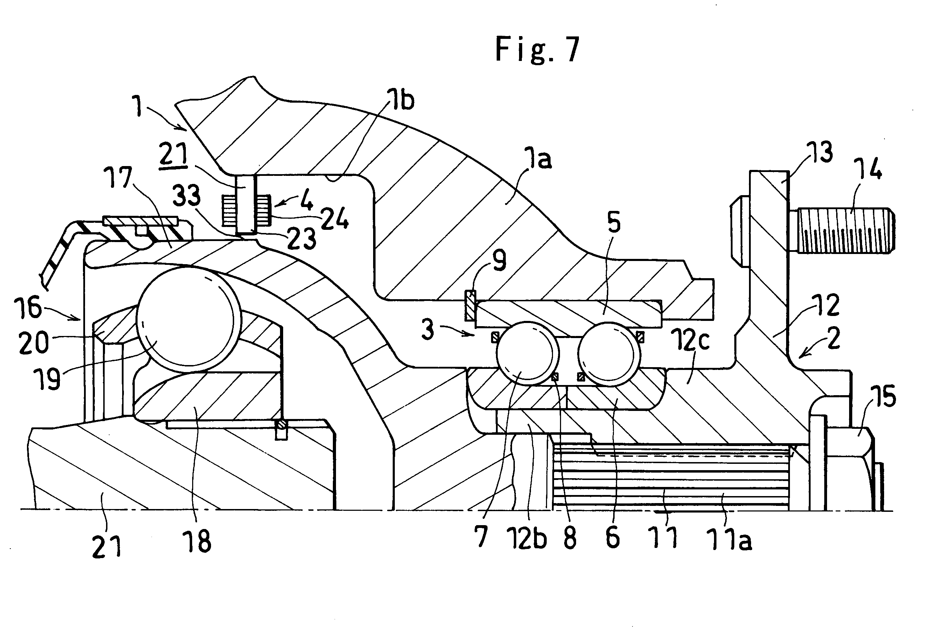

FIG. 7 shows a seventh embodiment of axle support device of the invention. This embodiment differs from the first embodiment with respect to the sensor device. Only the difference will be described below, and throughout the drawings concerned, like parts are designated by like reference numerals and will not be described repeatedly.

The axle support device shown in FIG. 7 has an axle member 2 which comprises a drive shaft 11 connected by a universal joint 16 to a power transmission (not shown), and a hub shaft 12 having a wheel mount portion 13 and fixed to the drive shaft 11. The drive shaft 11 is in the form of a stepped solid cylinder and has serrations on the outer periphery of a right end portion 11a which is smallest in diameter. The drive shaft 11 has a left end portion which is made into a bowl formed by press work and extending radially outward and leftward to provide an opening. The bowl portion serving as an outer ring 17 of the universal joint 16. The hub shaft 12 has a hollow cylindrical portion 12a provided on the inner periphery thereof with serrations corresponding to those of the drive shaft 11, a left end portion 12b integral with the left end of the cylindrical portion 12a, larger than the portion 12a in inside diameter and fitted around the stepped portion of the drive shaft 11, and an inner ring bearing portion 12c formed around the cylindrical portion 12a at an intermediate part thereof.

The universal joint 16 comprises the above-mentioned outer ring 17 integral with the left end of the drive shaft 11, an inner ring 18 opposed to the outer ring 17 and secured to a power transmission shaft 21 mounted on a differential device (not shown), balls 19 arranged between the two rings 17, 18, a retainer 20, etc.

The sensor device has a VR-type brushless resolver comprising a stator 21 and a rotor 33 for measuring radial displacements. The stator 21 is forced into the inner periphery of the left end (axial end toward the vehicle body) of the knuckle 1a of the suspension member 1 by a press fit, with its sensor face directed inward axially thereof. The knuckle 1a has an annular recess 1b for placing the stator 21 in so as to avoid the interference of the stator with the axle member 2. The outer ring 17 has an outer periphery opposed to the stator 21 radially thereof and serving as the face of the rotor 33 to be detected. Since the balls exert a force acting on the outer ring 17 of the universal joint 16, the outer periphery of the outer ring 17 can be utilized as the specified face to be detected by the stator 21 every time the rotor rotates one turn without additionally machining the outer periphery. The stator 21 comprises an annular core 23 having an inner periphery in the form of comb teeth and a stator winding 24 provided by forming coils on the respective teeth of the core 23. Signals from the stator 26 are delivered to the outside through a lead wire, connector pin and like wiring members (not shown).

When the axle member 2 rotates in the axle support device of the seventh embodiment, the gap between the sensor face of the stator 21 and the outer periphery of the outer ring 17 of the universal joint 16 (the face of the rotor 33 to be detected) varies for the stator 21 to produce voltage in accordance with the angle of rotation. Variations in the voltage of the stator 21 are sent to a processing circuit via the signal line. Further when the ground contact load on the tire varies, the displacement of the axle member 2 varies relative to the suspension member 1. This alters the air gap between the stator 21 and the outer periphery of the outer ring 17 of the universal joint 16, as detected by the resolver. As shown in FIG. 23, the variations in the air gap are output from the resolver as voltage variations, while the processing circuit of the resolver (sensor device) has a rotation detecting unit. This unit determines the angle of rotation or rotational speed required, for example, for ABS based on the output signal. The processing circuit of the resolver further has a ground contact load calculating unit which has stored therein an expression for calculating the ground contact load from the displacement output as a voltage variation. The ground contact load is calculated by the calculating unit. The ground contact load obtained is delivered to vehicle control means for controlling the vehicle properly.

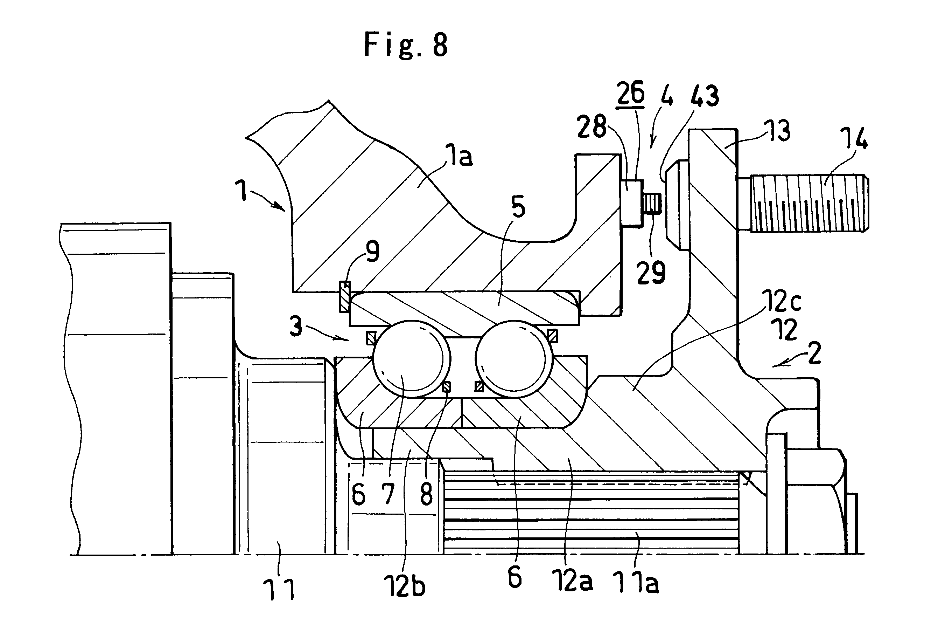

FIG. 8 shows an eighth embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of the axle support device shown in FIG. 8 has a VR-type brushless resolver comprising a stator 26 and a rotor 43 for measuring axial displacements. The stator 26 is fixed to the right end face (axial end toward the wheel) of the knuckle 1a of the suspension member 1, with its sensor face directed outward axially thereof. With respect to the radial direction, the stator 26 is located at the same position as the pitch circle of wheel attaching bolts 14 provided on the flange portion 13 of the hub shaft 12. The wheel attaching bolts 14 each have a top face serving as the face of the rotor 43 to be detected. Four to six wheel attaching bolts 14 are provided at equal intervals, so that the distance (gap) between the stator 26 and the top faces of the wheel attaching bolts 14 has four to six peaks every turn of rotation. Accordingly, the number of revolutions is detectable by counting up four to six peaks as one revolution without using a separate rotor. The stator 26 comprises an annular core 28 having an inner periphery in the form of comb teeth and a stator winding 29 provided by forming coils on the respective teeth of the core 28. Signals from the stator 26 are delivered to the outside through a lead wire, connector pin and like wiring members (not shown).

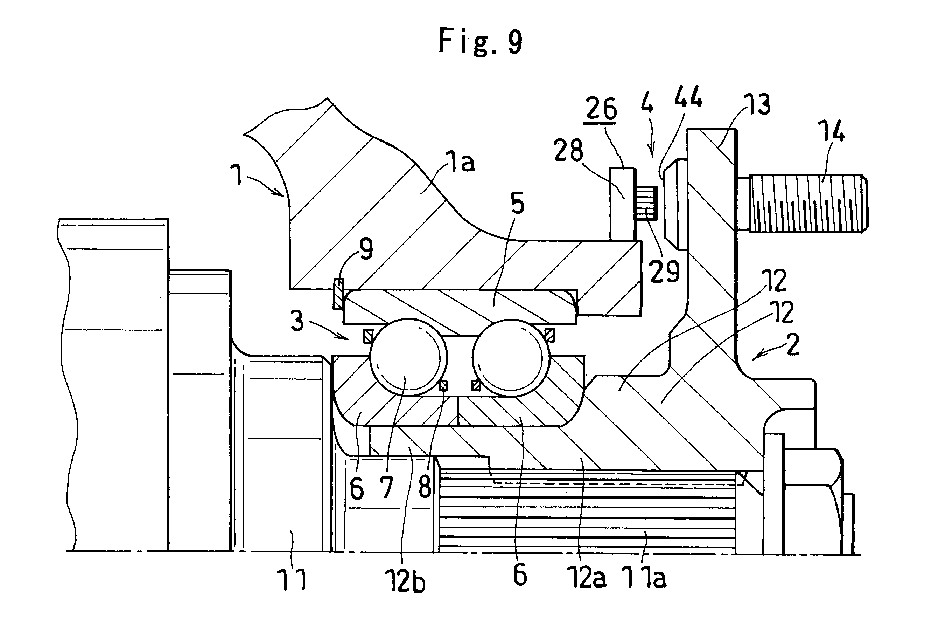

FIG. 9 shows a ninth embodiment of axle support device of the invention. This embodiment differs from the eighth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 26 and a rotor 44 for measuring axial displacements. The stator 26 is provided around the right end portion (axial end toward the wheel) of the knuckle 1a of the suspension member 1 by a press fit, with its sensor face directed outward axially thereof. With respect to the radial direction, the stator 26 is located at the same position as the pitch circle of wheel attaching bolts 14 provided on the flange portion 13 of the hub shaft 12. As is the case with the eighth embodiment, the wheel attaching bolts 14 each have a top face serving as the face of the rotor 43 to be detected. Four to six wheel attaching bolts 14 are provided at equal intervals, so that the distance (gap) between the stator 26 and the top faces of the wheel attaching bolts 14 has four to six peaks every turn of rotation. Accordingly, the number of revolutions is detectable by counting up four to six peaks as one revolution without using a separate rotor. The stator 26 comprises an annular core 28 having an inner periphery in the form of comb teeth and a stator winding 29 provided by forming coils on the respective teeth of the core 28. Signals from the stator 26 are delivered to the outside through a lead wire, connector pin and like wiring members (not shown).

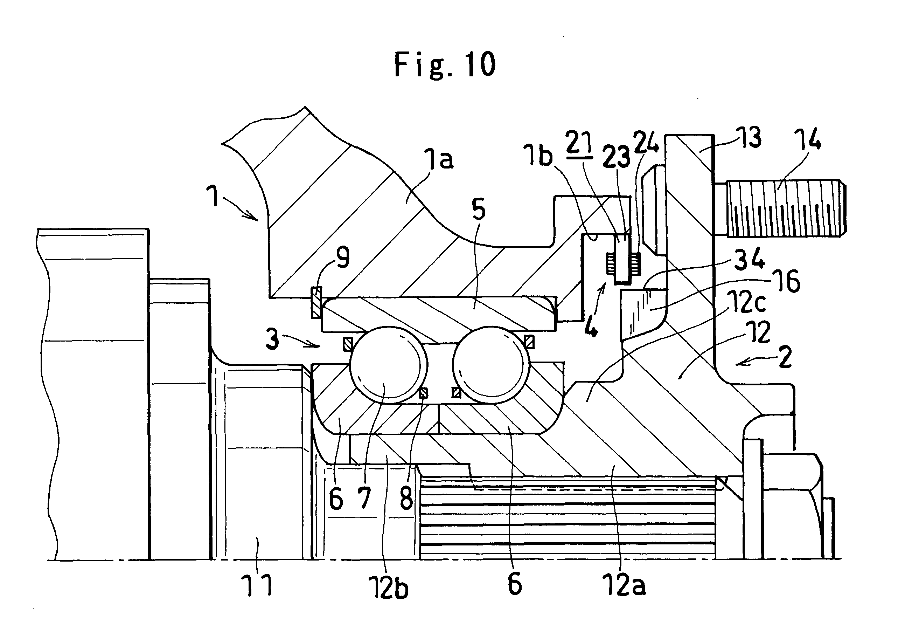

FIG. 10 shows a tenth embodiment of axle support device of the invention. This embodiment differs from the eighth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 21 and a rotor 34 for measuring radial displacements. The stator 21 is forced into the inner periphery of the right end portion (axial end toward the wheel) of the knuckle 1a of the suspension member 1 by a press fit, with its sensor face directed inward radially thereof. The knuckle 1a has an annular recess 1b formed in its inner periphery for placing the stator 21 in. According to this embodiment, the face of the rotor 34 to be detected is the outer peripheral faces of thick wall portions 16 formed in the flange portion 13 of the hub shaft 12 in the vicinity of the respective wheel attaching bolts 14 and noncircular when seen axially of the axle member 2. In the case where the flange portion 13 has four wheel attaching bolts 14, these portions 16 are generally square to rectangular when seen from above, and the distance (gap) between the stator 21 and the outer peripheral surfaces of the thick wall portions 16 has four peaks every turn of rotation. Accordingly, the number of revolutions is detectable by counting up four peaks as one revolution without using a separate rotor. The stator 21 comprises an annular core 23 having an inner periphery in the form of comb teeth and a stator winding 24 provided by forming coils on the respective teeth of the core 23. Signals from the stator 21 are delivered to the outside through a lead wire, connector pin and like wiring members (not shown).

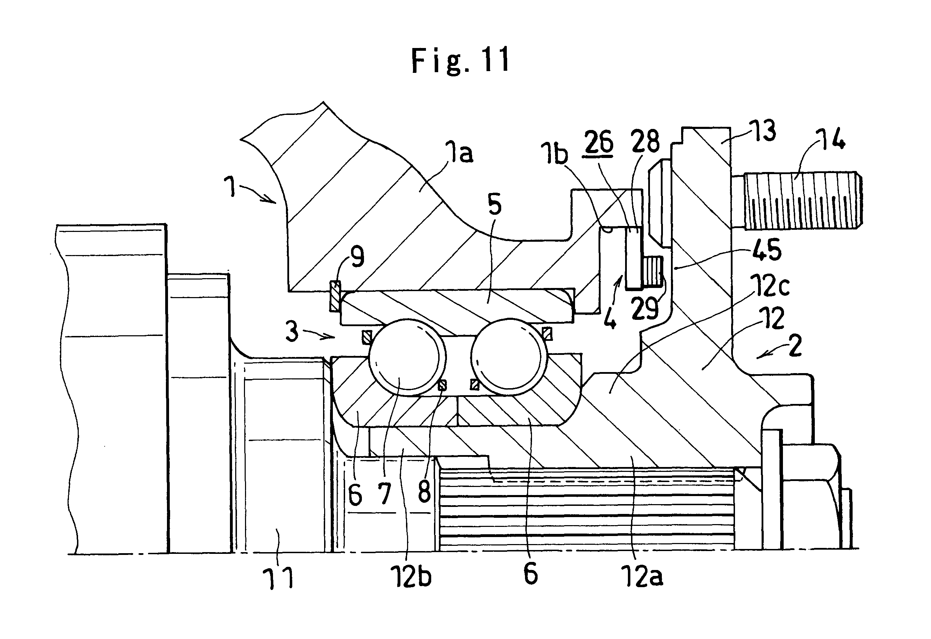

FIG. 11 shows an eleventh embodiment of axle support device of the invention. This embodiment differs from the eighth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 26 and a rotor 45 for measuring axial displacements. The stator 26 is provided around the right end portion (axial end toward the wheel) of the knuckle 1a of the suspension member 1 by a press fit, with its sensor face directed outward axially thereof. The knuckle right end portion is provided in its inner periphery with an annular recess 1b for placing the stator 26 in. With respect to the radial direction, the position of the stator 26 has a smaller radius than the pitch circle of wheel attaching bolts 14 provided on the flange portion 13 of the hub shaft 12. The flange portion 13 has thick wall portions 45 each serving as the face to be detected of the rotor 45. The thick wall portions 45 are noncircular and are provided in the vicinity of the respective wheel attaching bolts 14. The flange portion 13 has a small wall thickness at regions thereof which are away from the bolts 14. Accordingly, the distance (gap) between the stator 26 and the left side faces of the thick wall portions 45 has peaks which are equal in number to the number of the wheel attaching bolts 14 every turn of rotation, i.e., per revolution. Accordingly, the number of revolutions is detectable by counting up these peaks as one revolution without using a separate rotor. The stator 26 comprises an annular core 28 having an inner periphery in the form of comb teeth and a stator winding 29 provided by forming coils on the respective teeth of the core 28. Signals from the stator 26 are delivered to the outside through a lead wire, connector pin and like wiring members (not shown).

With the axle support devices of the eighth to eleventh embodiments, the axle member, when rotated, varies the gap between the sensor face of the stator 21 or 26 and the top faces of the bolts 14, the outer peripheral faces of the thick wall portions 16 or the left faces of the thick wall portions 45 on the hub shaft flange portion 13 (the face to be detected of the rotor 43, 44, 34 or 45) for the stator 21 or 26 to produce voltage in accordance with the angle of rotation. Variations in the voltage of the stator 21 or 26 are sent to the processing circuit via the signal line. Further when the ground contact load on the tire varies, the displacement of the axle member 2 varies relative to the suspension member 1. This alters the air gap between the stator 21 or 26 and the face to be detected of the rotor 43, 44, 34 or 45, as detected by the resolver. As shown in FIG. 23, the variations in the air gap are output from the resolver as voltage variations. Based on the output signal, the rotation detecting unit of the processing circuit of the resolver (sensor device) determines the angle of rotation or rotational speed required, for example, for ABS. The processing circuit of the resolver further has a ground contact load calculating unit which has stored therein an expression for calculating the ground contact load from the displacement output as a voltage variation. The ground contact load is calculated by the calculating unit. The ground contact load obtained is delivered to vehicle control means for controlling the vehicle properly.

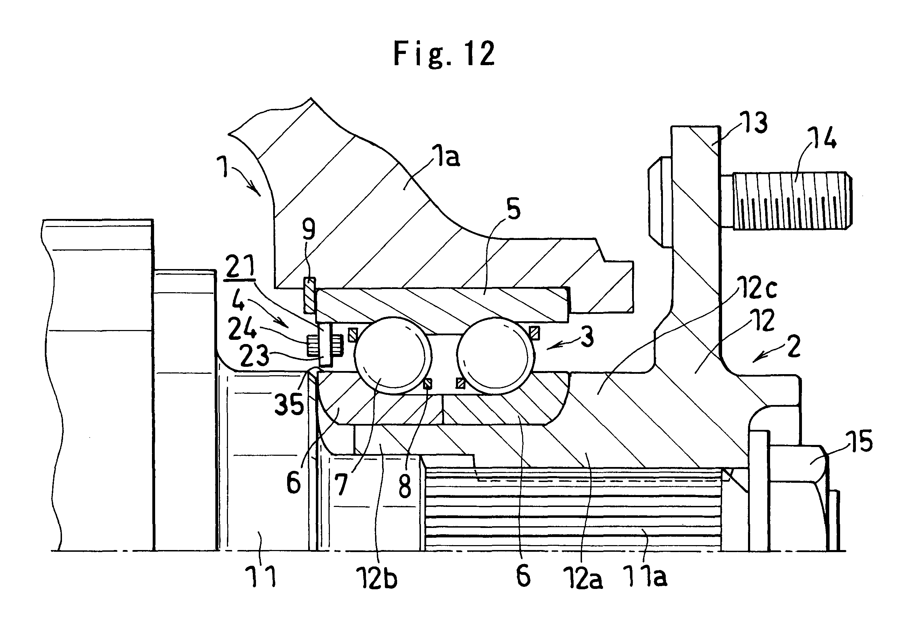

FIG. 12 shows a twelfth embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of the axle support device of this embodiment shown in FIG. 12 has a VR-type brushless resolver comprising a stator 21 and a rotor 35 for measuring radial displacements. The stator 21 is forced into the inner periphery of the left end (axial end toward the vehicle body) of outer ring 5 of the antifriction bearing 3, with its sensor face directed inward radially thereof. According to this embodiment, the shoulder of left inner ring 6 opposed to the stator 21 radially thereof serves as the rotor 35, and the inner ring shoulder is provided on its outer periphery with a specified face (eccentric cylindrical face, cut-out cylindrical face or the like) which is detectable by the stator 21 every turn of rotation of the rotor. The stator 21 comprises an annular core 23 having projections or indentations along the inner periphery thereof and a stator winding 24 provided by forming coils on the respective projections of the core 23. Signals from the stator 21 are delivered to the outside through a lead wire, connector pin and like wiring members (not shown).

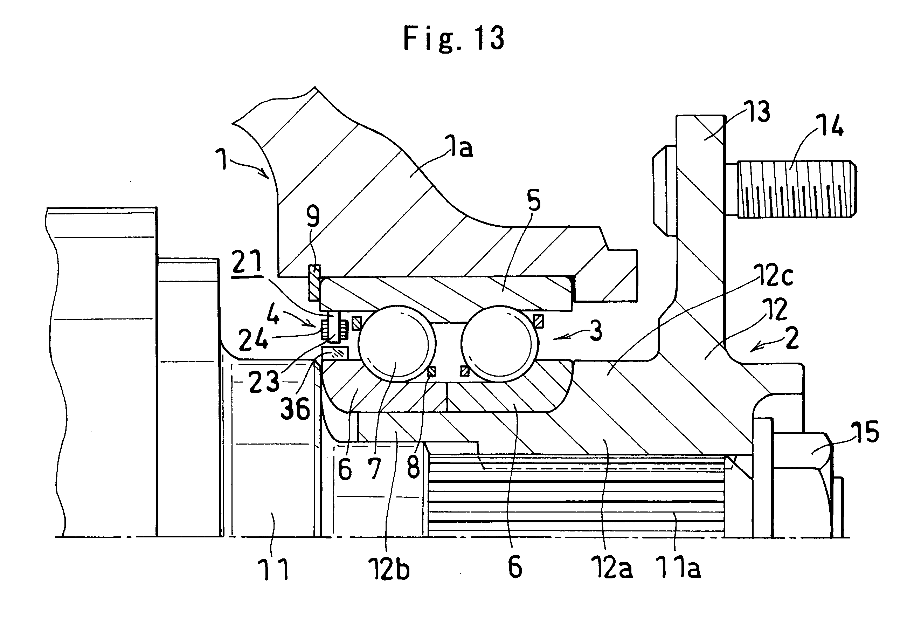

FIG. 13 shows a thirteenth embodiment of axle support device of the invention. This embodiment differs from the twelfth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 21 and a rotor 36 for measuring radial displacements. The stator 21 is forced into the left end (axial end toward the vehicle body) of the outer ring 5 of the antifriction bearing 3 by a press fit, with its sensor face directed inward radially thereof. According to this embodiment, the rotor 36 is a member separate from the inner ring 6 of the antifriction bearing 3 and provided on its outer periphery with a specified face (such as an eccentric cylindrical face or cut-out cylindrical face) which is detectable by the stator 21 every turn of rotation of the rotor. The rotor 36 is provided around the shoulder of the left inner ring 6 by a press fit so as to be opposed to the stator 21 radially thereof.

The stator 21 comprises an annular core 23 having projections or indentations along the inner periphery thereof and a stator winding 24 provided by forming coils on the respective projections of the core 23. Signals from the stator 21 are delivered to the outside through a lead wire, connector pin and like wiring members (not shown).

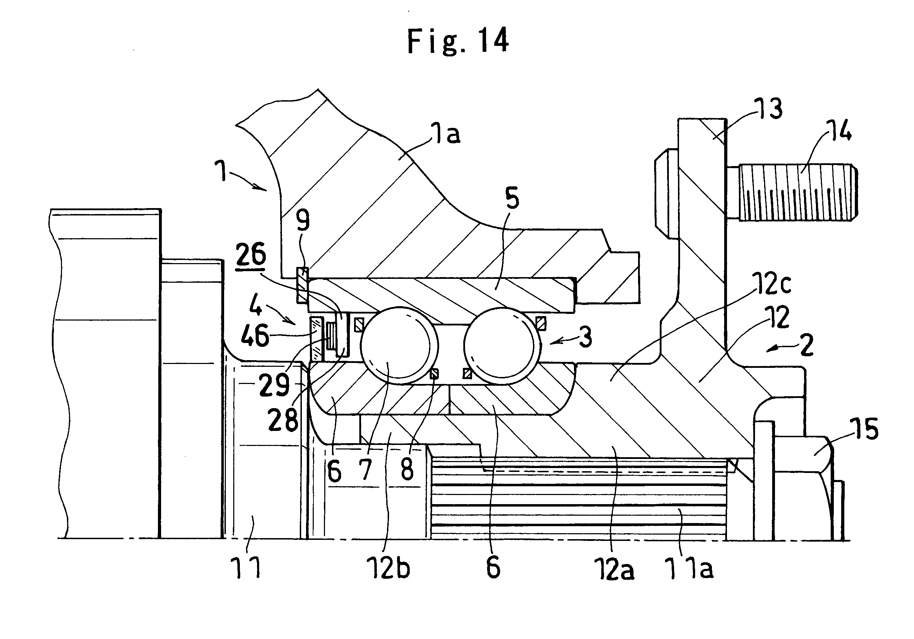

FIG. 14 shows a fourteenth embodiment of axle support device of the invention. This embodiment differs from the twelfth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 26 and a rotor 46 for measuring axial displacements. The stator 26 is forced into the left end (axial end toward the vehicle body) of the outer ring 5 of the antifriction bearing 3 by a press fit, with its sensor face directed outward radially thereof. The rotor 46 is annular and is fitted around the shoulder of the left inner ring 6 from the left by a press fit so as to be opposed to the stator 26 from outside radially inward. The rotor 46 is provided on its right side with a specified face (such as a face having a projection or indentation or a cut-out flat face) which is detectable by the stator 26 every turn of rotation of the rotor. The stator 26 comprises an annular core 28 having projections or indentations on one side face thereof and a stator winding 29 provided by forming coils on the respective projections of the core 28. Signals from the stator 26 are delivered to the outside through a lead wire, connector pin and like wiring members (not shown).

FIG. 14 shows the stator 26 as positioned inside, with the rotor 46 positioned externally of the stator, whereas this position relationship can be reversed; the stator 26 is forced into the inner periphery of left end of the outer ring 5 of the bearing 3, with its sensor face directed inward axially thereof, and the rotor 46 is fitted around the shoulder of the left inner ring 6 from the left by a press fit so as to be opposed to the stator 26 from inside outward in the axial direction (not shown). The arrangement wherein the stator 26 is positioned externally of the rotor 46 has the advantage that the lead wire can be led out easily.

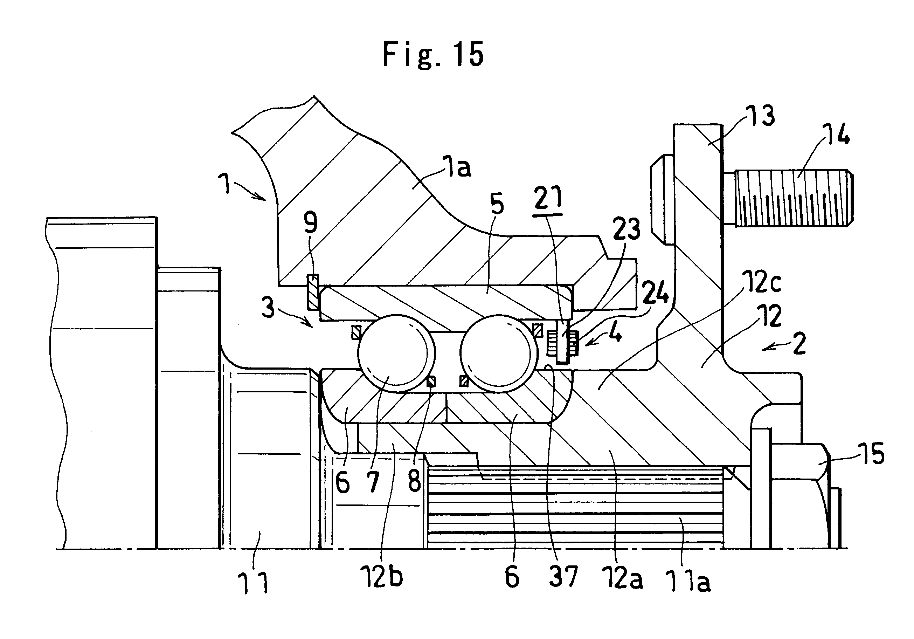

FIG. 15 shows a fifteenth embodiment of axle support device of the invention. This embodiment differs from the twelfth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 21 and a rotor 37 for measuring radial displacements. The stator 21 is forced into the right end (axial end toward the wheel) of the outer ring 5 of the antifriction bearing 3 by a press fit, with its sensor face directed inward radially thereof. The right inner ring 6 has a shoulder opposed to the stator 21 radially thereof and serving as the rotor 37. The shoulder of the right inner ring 6 is provided on its outer periphery with a specified face (such as an eccentric cylindrical face or cut-out cylindrical face) which is detectable by the stator 21 every turn of rotation of the rotor.

The stator 21 comprises an annular core 23 having projections or indentations along the inner periphery or side face thereof and a stator winding 24 provided by forming coils on the respective projections of the core 23. Signals from the stator 21 are delivered to the outside through a lead wire, connector pin and like wiring members (not shown).

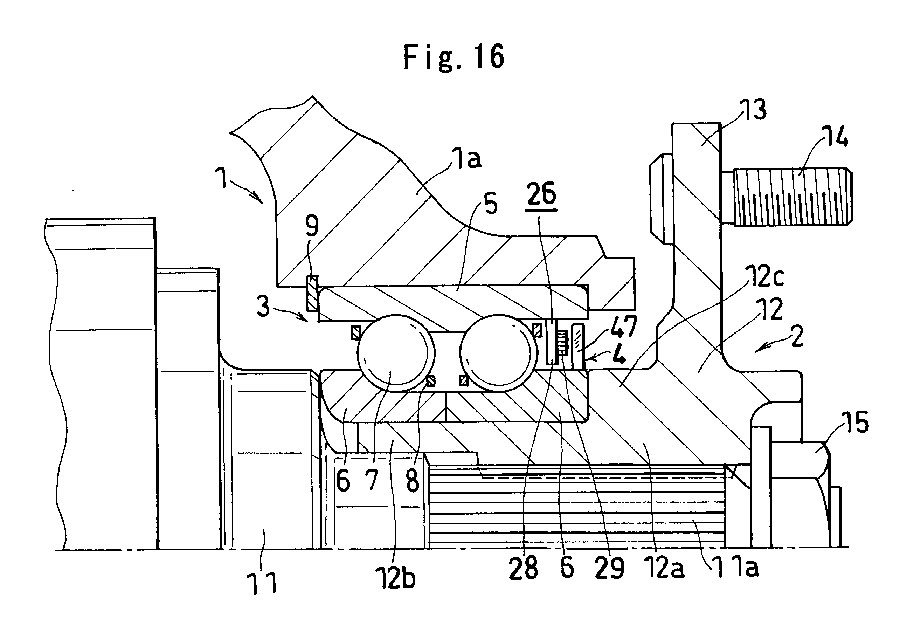

FIG. 16 shows a sixteenth embodiment of axle support device of the invention. This embodiment differs from the twelfth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 26 and a rotor 47 for measuring axial displacements. The stator 26 is forced into the right end (axial end toward the wheel) of the outer ring 5 of the antifriction bearing 3 by a press fit, with its sensor face directed outward radially thereof. The rotor 47 is annular and is fitted around the shoulder of the right inner ring 6 from the right by a press fit so as to be opposed to the stator 26 from outside radially inward. The rotor 47 is provided on its left side with a specified face (such as a face having a projection or indentation or a cut-out flat face) which is detectable by the stator 26 every turn of rotation of the rotor. The stator 26 comprises an annular core 28 having projections or indentations on one side face thereof and a stator winding 29 provided by forming coils on the respective projections of the core 28. Signals from the stator 26 are delivered to the outside through a lead wire, connector pin and like wiring members (not shown).

FIG. 16 shows the stator 26 as positioned inside, with the rotor 47 positioned externally of the stator, whereas this position relationship can be reversed; the stator 26 is forced into the inner periphery of right end of the outer ring 5 of the bearing 3, with its sensor face directed inward axially thereof, and the rotor 47 is fitted around the shoulder of the right inner ring 6 from the right by a press fit so as to be opposed to the stator 26 from inside outward in the axial direction (not shown). The arrangement wherein the stator 26 is positioned externally of the rotor 47 has the advantage that the lead wire can be led out easily.

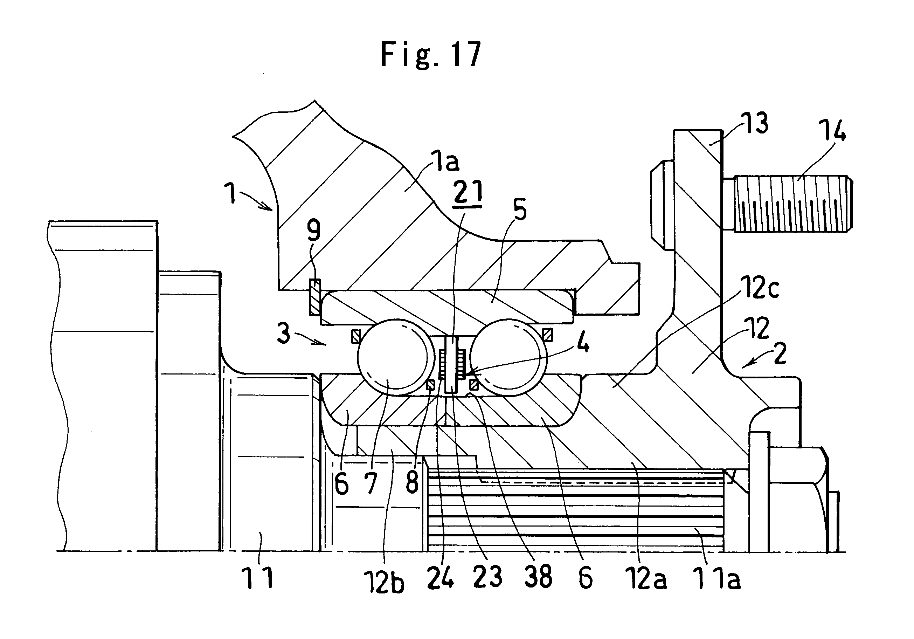

FIG. 17 shows a seventeenth embodiment of axle support device of the invention. This embodiment differs from the twelfth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 21 and a rotor 38 for measuring radial displacements. The stator 21 is forced into the inner periphery of approximate midportion of the outer ring 5 of the antifriction bearing 3 by a press fit, with its sensor face directed inward radially thereof. The right inner ring 6 has a left end portion opposed to the stator 21 radially thereof and serving as the rotor 38. The left end portion of the right inner ring 6 is provided on its outer periphery with a specified face (such as an eccentric cylindrical face or cut-out cylindrical face) which is detectable by the stator 21 every turn of rotation of the rotor.

The stator 21 comprises an annular core 23 having projections or indentations along the inner periphery thereof and a stator winding 24 provided by forming coils on the respective projections of the core 23. Signals from the stator 21 are delivered to the outside through a lead wire, connector pin and like wiring members (not shown).

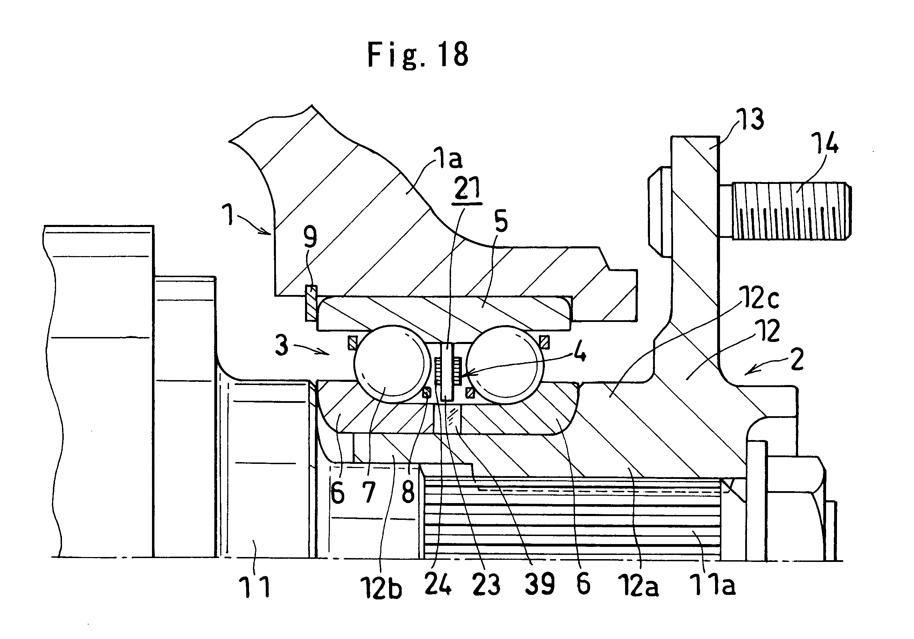

FIG. 18 shows a eighteenth embodiment of axle support device of the invention. This embodiment differs from the twelfth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 21 and a rotor 39 for measuring radial displacements. The stator 21 is forced into the inner periphery of midportion of the outer ring 5 of the antifriction bearing 3 by a press fit, with its sensor face directed inward radially thereof. The rotor 39 is annular and is fitted around the hollow cylindrical portion 12a of the hub shaft 12 so as to be opposed to the stator 21 radially thereof, namely, so as to be positioned between the left and right inner rings 6. The rotor 39 has on its outer periphery a specified face (such as an eccentric cylindrical face or cut-out cylindrical face) which is detectable by the stator 21 every turn of rotation of the rotor.

The stator 21 comprises an annular core 23 having projections or indentations along the inner periphery thereof and a stator winding 24 provided by forming coils on the respective projections of the core 23. Signals from the stator 21 are delivered to the outside through a lead wire, connector pin and like wiring members (not shown).

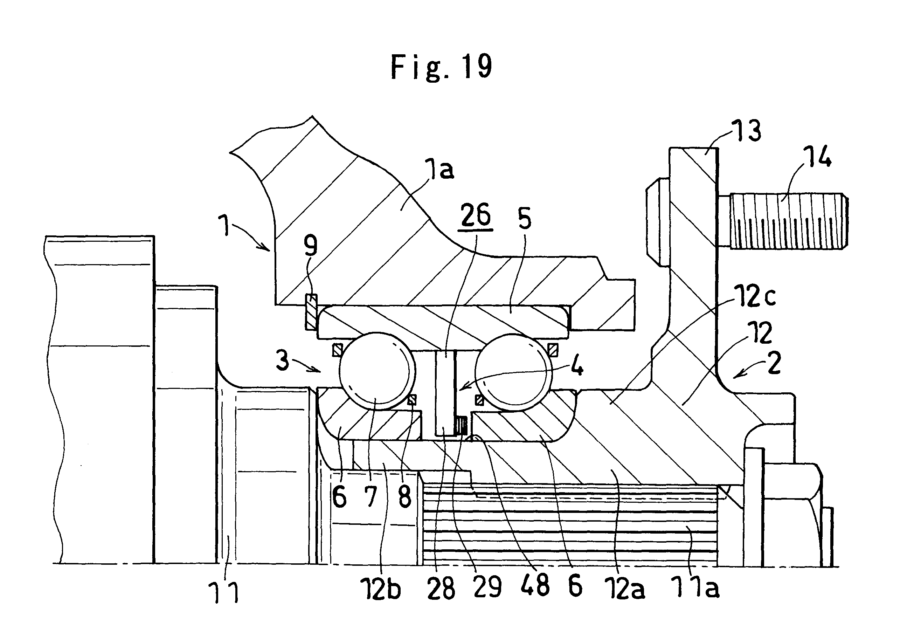

FIG. 19 shows a nineteenth embodiment of axle support device of the invention. This embodiment differs from the twelfth embodiment with respect to the sensor device. Only the difference will be described below, and throughout the drawings concerned, like parts are designated by like reference numerals and will not be described repeatedly.

The sensor device 4 of this embodiment has a VR-type brushless resolver comprising a stator 26 and a rotor 48 for measuring axial displacements. The stator 26 is forced into the inner periphery of midportion of the outer ring 5 of the antifriction bearing 3 by a press fit, with its sensor face directed rightward radially thereof. A space is provided between the left and right inner rings 6. The stator 26 has a sensor face opposed to the left face of the right inner ring 6. The left face of the right inner ring 6 serves as the rotor 48 and includes a specified face (face having a projection or indentation or cut-out flat face) which is detectable by the stator 26 every turn of rotation of the rotor. The stator 26 comprises an annular core 28 having projections or indentations on one side thereof and a stator winding 29 provided by forming coils on the respective projections of the core 28. Signals from the stator 26 are delivered to the outside through a lead wire, connector pin and like wiring members (not shown).

With the axle support devices of the twelfth to nineteenth embodiments, the axle member, when rotated, varies the gap between the sensor face of the stator 21 or 26 and the face to be detected of the rotor 35, 36, 46, 37, 47, 38, 39 or 48 for the stator 21 or 26 to produce voltage in accordance with the angle of rotation. Variations in the voltage of the stator 21 or 26 are sent to the processing circuit via the signal line. Further when the ground contact load on the tire varies, the displacement of the axle member 2 varies relative to the suspension member 1. This alters the air gap between the stator 21 or 26 and the face to be detected of the rotor 35, 36, 46, 37, 47, 38, 39 or 48, as detected by the resolver. As shown in FIG. 23, the variations in the air gap are output from the resolver as voltage variations. Based on the output signal, the rotation detecting unit of the processing circuit of the resolver (sensor device) determines the angle of rotation or rotational speed required, for example, for ABS. The processing circuit of the resolver further has a ground contact load calculating unit which has stored therein an expression for calculating the ground contact load from the displacement output as a voltage variation. The ground contact load is calculated by the calculating unit. The ground contact load obtained is delivered to vehicle control means for controlling the vehicle properly.

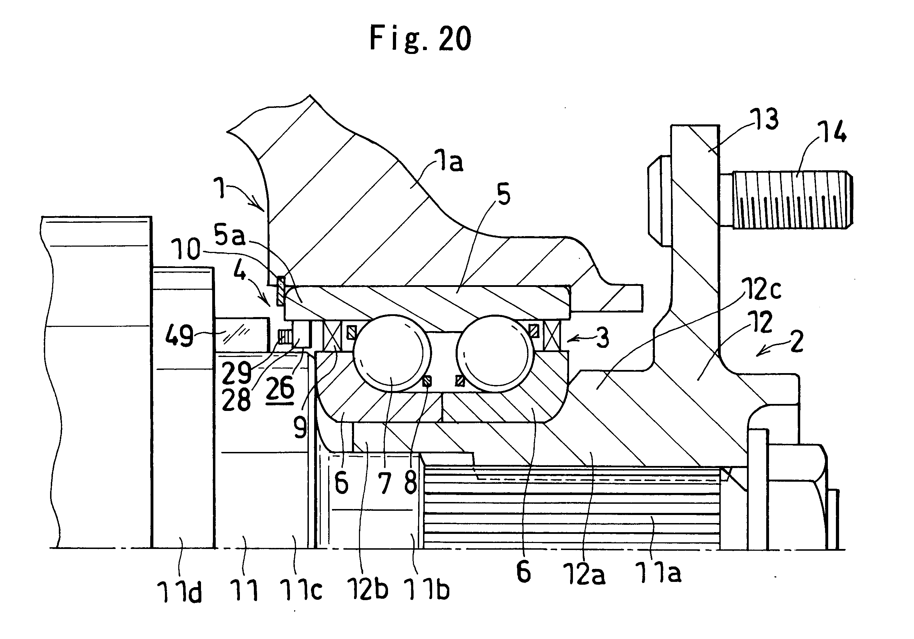

FIG. 20 shows a twentieth embodiment of axle support device of the invention. This embodiment differs from the first embodiment with respect to the sensor device. Only the difference will be described below, and throughout the drawings concerned, like parts are designated by like reference numerals and will not be described repeatedly.

The sensor device 4 of the axle support device of this embodiment shown in FIG. 20 has a VR-type brushless resolver comprising a stator 26 and a rotor 49 for measuring axial displacements. The stator 26 is forced into the inner periphery of a leftward extension (axial end toward the vehicle body) 5a of outer ring 5 of the antifriction bearing 3, with its sensor face directed inward radially thereof. The rotor 49 is provided around the second large-diameter portion 11c of the drive shaft 11 of the axle member 2 by a press fit so as to be opposed to the stator 26 axially thereof. The rotor 49 has a left side face in contact with the right face of the third large-diameter portion 11d and a right side face having a specified face (such as a face having a projection or indentation or cut-out flat face) which is detectable by the stator 26 every turn of rotation of the rotor. The stator 26 comprises an annular core 28 having projections or indentations on one side thereof and a stator winding 29 provided by forming coils on the respective projections of the core 28. Signals from the stator 26 are delivered to the outside through a lead wire, connector pin and like wiring members (not shown).

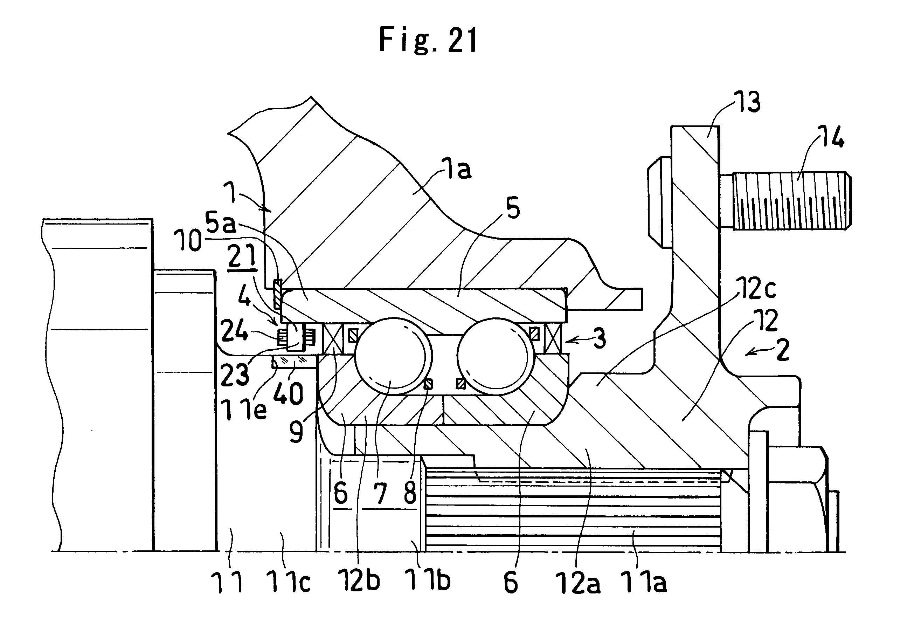

FIG. 21 shows a twenty-first embodiment of axle support device of the invention. This embodiment differs from the twentieth embodiment with respect to the sensor device. Only the difference will be described below, and throughout the drawings concerned, like parts are designated by like reference numerals and will not be described repeatedly.

The sensor device 4 of the axle support device of this embodiment has a VR-type brushless resolver comprising a stator 21 and a rotor 40 for measuring radial displacements. The stator 21 is forced into the inner periphery of a leftward extension (axial end toward the vehicle body) 5a of outer ring 5 of the antifriction bearing 3, with its sensor face directed inward radially thereof. The second large-diameter portion 11c of the drive shaft 11 of the axle member 2 is provided in a right shoulder thereof with an annular recess 11e opposed to the stator 21 radially thereof. The rotor 40 has on its outer periphery a specified face (such as an eccentric cylindrical face or cut-out cylindrical face) which is detectable by the stator 21 every turn of rotation of the rotor, and is forced into the annular recess 11e by a press fit. The stator 26 comprises an annular core 28 having projections or indentations on one side thereof and a stator winding 29 provided by forming coils on the respective projections of the core 28. Signals from the stator 26 are delivered to the outside through a lead wire, connector pin and like wiring members (not shown).

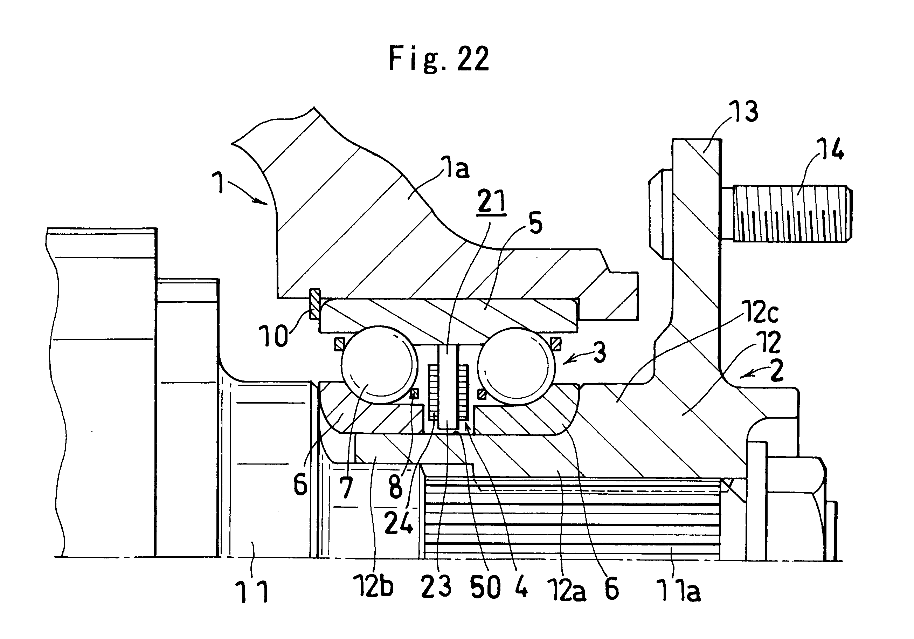

FIG. 22 shows a twenty-second embodiment of axle support device of the invention. This embodiment differs from the twentieth embodiment with respect to the sensor device. Only the difference will be described below, and throughout the drawings concerned, like parts are designated by like reference numerals and will not be described repeatedly.

The sensor device 4 of the axle support device of this embodiment has a VR-type brushless resolver comprising a stator 21 and a rotor 50 for measuring radial displacements. The stator 21 is forced into the inner periphery of the midportion (between rolling bodies as arranged in the axial direction) of outer ring 5 of the antifriction bearing 3, with its sensor face directed inward radially thereof. The leftward extension 5a of the outer ring 5 is omitted from this embodiment. The outer periphery of the hub shaft 12 opposed to the stator 21 outward radially thereof from inside serves as the rotor 50. This portion of the hub shaft has on the outer periphery a specified face (such as an eccentric cylindrical face or cut-out cylindrical face) which is detectable by the stator 21 every turn of rotation of the rotor. The stator 21 comprises an annular core 23 having projections or indentations on the inner periphery thereof and a stator winding 24 provided by forming coils on the respective projections of the core 28. Signals from the stator 26 are delivered to the outside through a lead wire, connector pin and like wiring members (not shown).

With the axle support devices of the twentieth to twenty-second embodiments, the axle member, when rotated, varies the gap between the sensor face of the stator 21 or 26 and the face to be detected of the rotor 49, 40 or 50 for the stator 21 or 26 to produce voltage in accordance with the angle of rotation. Variations in the voltage of the stator 21 or 26 are sent to the processing circuit via the signal line. Further when the ground contact load on the tire varies, the displacement of the axle member 2 varies relative to the suspension member 1. This alters the air gap between the stator 21 or 26 and the face to be detected of the rotor 49, 40 or 50, as detected by the resolver. As shown in FIG. 23, the variations in the air gap are output from the resolver as voltage variations. Based on the output signal, the rotation detecting unit of the processing circuit of the resolver (sensor device) determines the angle of rotation or rotational speed required, for example, for ABS. The processing circuit of the resolver further has a ground contact load calculating unit which has stored therein an expression for calculating the ground contact load from the displacement output as a voltage variation. The ground contact load is calculated by the calculating unit. The ground contact load obtained is delivered to vehicle control means for controlling the vehicle properly.

### INDUSTRIAL APPLICABILITY

The axle support device of the invention, when used, accurately detects data as to motor vehicles as required for the control of the vehicle, thus improving the accuracy of vehicle control.

## Claims

1. An axle support device comprising a suspension member to be attached to a vehicle body, an axle member for a wheel to be mounted thereon, an antifriction bearing having an outer ring attached to the suspension member, an inner ring mounted on the axle member and rolling bodies arranged between the two rings, and a sensor device,
the axle support device being **characterized in that** the sensor device comprises a resolver composed of a stator and a rotor, the stator being provided on one of the suspension member and the antifriction bearing outer ring, the rotor being provided on one of the axle member and the antifriction bearing inner ring.

2. An axle support device according to claim 1 wherein the stator is provided on the suspension member, and the rotor is provided on the axle member.

3. An axle support device according to claim 2 wherein the axle member comprises a drive shaft to be connected to a power transmission and a hub shaft having a wheel mount portion and fixed to the drive shaft, and the stator is provided on a wheel side of the suspension member with respect to an axial direction thereof, the rotor being provided on the hub shaft of the axle member.

4. An axle support device according to claim 2 wherein the axle member comprises a drive shaft to be connected to a power transmission and a hub shaft having a wheel mount portion and fixed to the drive shaft, and the stator is provided on a vehicle body side of the suspension member with respect to an axial direction thereof, the rotor being provided on the drive shaft of the axle member.

5. An axle support device according to claim 2 wherein the stator and the rotor are opposed to each other axially thereof.

6. An axle support device according to claim 2 wherein the stator and the rotor are opposed to each other radially thereof.

7. An axle support device according to claim 2 wherein the axle member is provided with a universal joint at one end thereof closer to the vehicle body, and the universal joint has an outer ring outer periphery serving as a face of the rotor to be detected.

8. An axle support device according to claim 2 wherein the axle member is provided with a flange portion having wheel attaching bolts, and the flange portion of the axle member serves as the rotor.

9. An axle support device according to claim 8 wherein the stator and the rotor are opposed to each other axially thereof.

10. An axle support device according to claim 8 wherein the stator and the rotor are opposed to each other radially thereof.

11. An axle support device according to claim 9 wherein the wheel attaching bolts each have a top face serving as a face of the rotor to be detected.

12. An axle support device according to claim 10 wherein the flange portion is provided on one side thereof with thick wall portions which are noncircular when seen from an axial direction thereof, and the thick wall portions each have a peripheral face serving as a face of the rotor to be detected.

13. An axle support device according to claim 1 wherein the stator is provided on the outer ring of the antifriction bearing, and the rotor is provided on the inner ring of he antifriction bearing.

14. An axle support device according to claim 13 wherein the stator is provided on one of a wheel side and a vehicle body side of the outer ring with respect to an axial direction thereof, and an outer periphery of the inner ring opposed to the stator serves as a face of the rotor to be detected.

15. An axle support device according to claim 13 wherein the stator is provided on one of a wheel side and a vehicle body side of the outer ring with respect to an axial direction thereof, and an outer periphery of the inner ring opposed to the stator is provided with the rotor as a member separate from the inner ring.

16. An axle support device according to claim 13 wherein the stator is provided at a midportion of the outer ring, and a face of the inner ring opposed to the stator serves as a face of the rotor to be detected.

17. An axle support device according to claim 13 wherein the stator is provided at a midportion of the outer ring, and an outer periphery of the inner ring opposed to the stator is provided with the rotor as a member separate from the inner ring.

18. An axle support device according to claim 1 wherein the stator is provided on the outer ring of the antifriction bearing, and the rotor is provided on the axial member.

19. An axle support device according to claim 18 wherein the stator is provided on the outer ring on a vehicle body side thereof with respect to an axial direction thereof.

20. An axle support device according to claim 18 wherein the stator is provided on the outer ring between rolling bodies as arranged axially thereof.

21. An axle support device according to any one of claims 1 to 20 wherein the antifriction bearing has the rolling bodies in two rows, and the outer ring is an integral ring having two raceways, and the inner ring comprises divided rings each having a single raceway.
